# EUROPEAN PATENT SPECIFICATION

(11) **EP 3 984 785 B1**
(45) Date of publication and mention of the grant of the patent: **07.01.2026**
(21) Application number: 20823377.5
(22) Date of filing: 05.06.2020
(51) Int. Cl.: B29D 30/00, B29D 30/54, B60C 19/00, B60C 11/02, B60C 23/04

(54) **PNEUMATIC TIRE MANUFACTURING METHOD**
VERFAHREN ZUR HERSTELLUNG EINES LUFTREIFENS
PROCÉDÉ DE FABRICATION DE PNEUMATIQUE

(30) Priority: 12.06.2019 JP 2019109532
(43) Date of publication of application: 20.04.2022
(73) Proprietor: BRIDGESTONE CORPORATION, Chuo-ku Tokyo 104-8340 (JP)
(72) Inventor: TODA Hayato, Tokyo, 104-8340 (JP)
(74) Representative: Marks & Clerk LLP
(86) International application number: PCT/JP2020/022379
(87) International publication number: WO 2020/250834

(56) References cited:
- EP-A2- 1 688 276
- WO-A1-2015/076381
- JP-A- 2006 231 984
- JP-A- 2007 112 163
- JP-A- 2010 538 897
- JP-A- 2014 169 060
- JP-A- 2018 512 333
- JP-A- 2018 512 333

## Description

### TECHNICAL FIELD

The present invention relates to a pneumatic tire and a method of manufacturing a pneumatic tire.

### BACKGROUND ART

Tires (particularly aircraft tires) are known that are provided with balance patches on the inner surface to adjust a weight balance of the tires (Patent Literature 1). A balance patch disclosed in Patent Literature 1 has a flat sheet-like shape, and is attached to the inner surface of the tire with an adhesive. The balance patch disclosed in Patent Literature 1 is used such that the entire surface of the balance patch on one side is stuck to the inner surface of the tire, and thus has the following problems.

When a tire reused, a tread rubber of the spent tire is scraped off, and a new tread rubber is attached to the tire. The balance patch, when provided on the inner surface of the tire, is often temporarily removed and again attached to the inner surface of the tire so as to adjust the weight balance. Since the balance patch needs to be scraped off by use of a hand grinder and the like when removed, the scraping operation leads to a reduction in productivity of manufacturing retread tires. To deal with this, a technique is disclosed that provides a balance patch with a projection so as to facilitate the removal of the balance patch to save the time during the manufacture of retread tires (Patent Literature 2).

JP2014169060A discloses a method for fitting plural devices to a tire. At first, static unbalance original to a tire before fitting a device is measured. Then the plural devices are fitted to positions where the static unbalance original to a tire can be reduced because of resultant force of the static unbalance caused by weight of the plural devices.

EP1688276A2 discloses a tire that has running strips, side walls and a tire module arranged on a tire inner side. A rubber strip is provided for compensation of the irregular shape of the tire due to a tire module arrangement on a tire inner side. The rubber strip has a recess in the area of the tire module arrangement. The rubber strip is connected with the tire inner side, during the tire vulcanization.

JP2018512333A discloses a tyre of maximum width LT, including a tread which is asymmetric according to the equatorial plane, one of the sides of which is intended for being positioned on the outside with respect to the vehicle, an inner crown lining, radially innermost on the crown, and an electronic device having at least one measurement sensor for measuring at least one parameter. Said electronic device is installed in the tyre under the crown, radially on the inside of the inner crown lining, on the side of the tread intended for being positioned on the outside with respect to the vehicle relative to the equatorial plane and such that the axial distance from the centre of gravity of the electronic device to the equatorial plane is no higher than 5 % and no lower than 25 % of the maximum axial width LT of the tyre.

### CITATION LIST

### PATENT LITERATURE

Patent Literature 1: Japanese Unexamined Patent Application Publication No. 2012-121561
Patent Literature 1: Japanese Unexamined Patent Application Publication No. 2014-133504

### SUMMARY OF INVENTION

### TECHNICAL PROBLEM

The demand for appropriate management of tires has grown according to information such as used situations or traveling distances of the tires acquired from a RFID tag (a functional component) attached to the inner surface of each tire. When both the balance patch and the RFID tag are attached to the inner surface of the tire, there is a risk of unintentionally causing damage to the RFID tag in the process of removing the balance patch during the manufacture of the retread tire. Patent Literature 2 does not mention this issue, which still needs to be improved.

To solve the conventional problems described above, the present invention provides a pneumatic tire and a method of manufacturing a pneumatic tire capable of preventing damage to a functional component in a process of removing a balance patch during the manufacture of a retread tire.

### TECHNICAL SOLUTION

According to a first aspect of the invention there is provided a method of manufacture a tire as specified in claim 1.

A pneumatic tire according to an aspect of the present invention includes at least one balance patch (balance patch 40) arranged on a tire inner surface (tire inner surface 30) that is a surface on an inner side of the tire (tire 10), and a functional component (functional component 50) having a communication function and arranged on the tire inner surface at a position separated at a predetermined angle (predetermined angle θ) from the at least one balance patch in a tire circumferential direction.

### ADVANTAGEOUS EFFECTS

The present invention can prevent damage to the functional component.

### BRIEF DESCRIPTION OF DRAWINGS

[Fig. 1] Fig. 1 is a cross-sectional view taken along a width direction and a radial direction of a pneumatic tire.
[Fig. 2] Fig. 2 is a cross-sectional view taken along a circumferential direction of the pneumatic tire.
[Fig. 3A] Fig. 3A is a perspective view illustrating a balance patch according to the present embodiment.
[Fig. 3B] Fig. 3B is a perspective view illustrating a functional component according to the present embodiment.
[Fig. 4] Fig. 4 is a cross-sectional view taken along the circumferential direction of the pneumatic tire.
[Fig. 5] Fig. 5 is a cross-sectional view taken along the circumferential direction of the pneumatic tire.
[Fig. 6] Fig. 6 is a cross-sectional view taken along the circumferential direction of the pneumatic tire.

### DESCRIPTION OF EMBODIMENTS

Hereinafter, some embodiments according to the present invention are described with reference to the drawings. The same elements illustrated in the drawings are denoted by the same reference numerals, and overlapping explanations are not made below.

### 1. Configuration of Pneumatic Tire

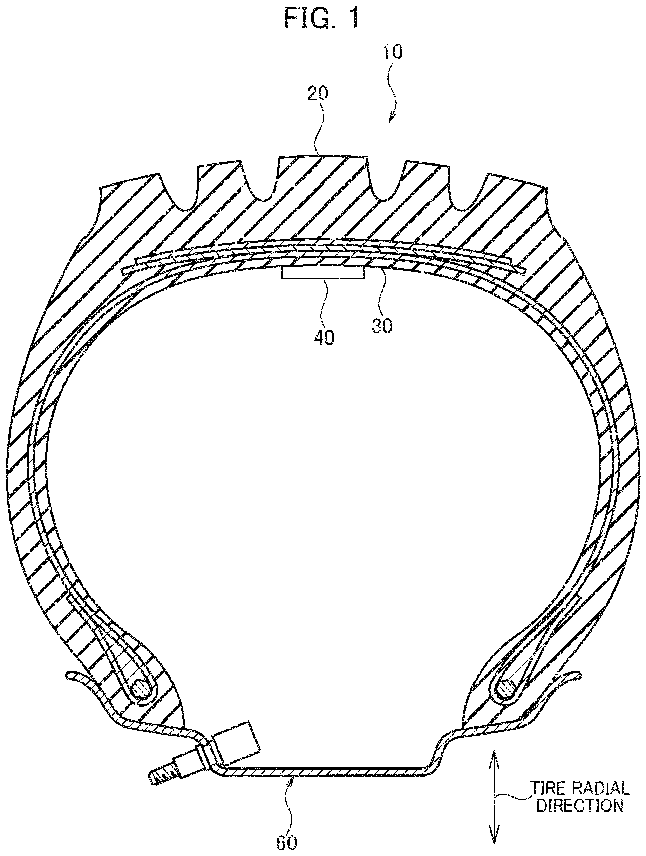

A configuration of a pneumatic tire 10 (referred to also simply as a "tire") according to the present embodiment is described below with reference to Fig. 1.

As illustrated in Fig. 1, the tire 10 is used in a state of being attached to a rim hole 60. The inner space of the tire 10 attached to the rim hole 60 is filled with gas such as air. The tire 10 according to the present embodiment is illustrated with an aircraft tire mounted to an aircraft. The tire 10 is not limited to the use as the aircraft tire, and may be used for automobiles, trucks (including off-road dump trucks), and buses, for example.

A tread 20, which comes into contact with a road surface, is provided on the rear surface with a balance patch 40. The balance patch 40 is attached to the surface on the inner side of the tire 10, which is a tire inner surface 30. The balance patch 40 is a member used for improving uniformity of the tire 10, and is typically used for aircraft tires.

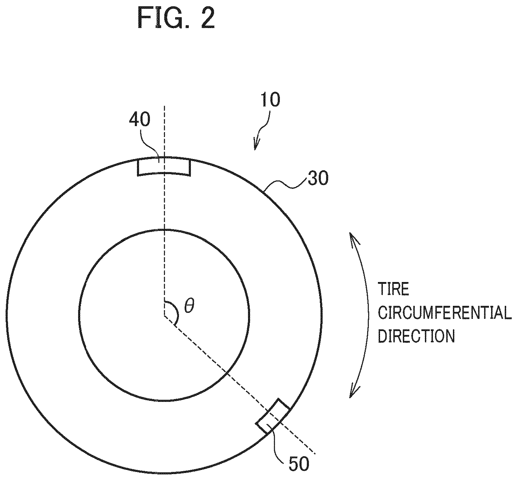

As illustrated in Fig. 2, the tire inner surface 30 is also provided with a functional component 50 in addition to the balance patch 40. The functional component 50 is attached to the tire inner surface 30 at a position separated at a predetermined angle θ from the balance patch 40 in the tire circumferential direction. The predetermined angle θ is 90 degrees or greater when the single balance patch 40 is attached to the tire inner surface 30.

A gap between the balance patch 40 and the functional component 50 in the tire circumferential direction is longer than a length of the balance patch 40 in the tire circumferential direction, as illustrated in Fig. 2.

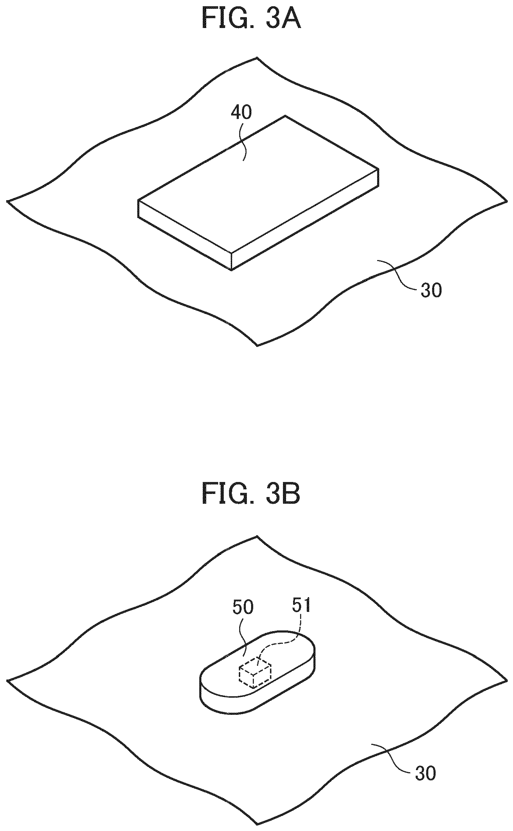

The balance patch 40 and the functional component 50 are described in more detail below with reference to Fig. 3A and Fig. 3B. As illustrated in Fig. 3A, the balance patch 40 has a flat sheet-like shape. The balance patch 40 is stuck to the tire inner surface 30 with an adhesive. The balance patch 40 is formed from a rubber composition having a large mass in view of the adjustment of the weight balance of the tire 10.

As illustrated in Fig. 3B, the functional component 50 has an oval shape. The functional component 50 has a configuration in which an electronic component such as a radio frequency identifier (RFID) tag 51 is covered with a rubber member. The material used for the functional component 50 is not limited to the rubber member, and may be a metal member or a resin member. The functional component 50 is also stuck to the tire inner surface 30 with an adhesive, as in the case of the balance patch 40. The balance patch 40 and the functional component 50 are both attached on the tire equator line.

The RFID tag 51 includes an antenna, and an IC chip having a communication function and operated by dielectric power generated by weak radio waves received by the antenna. The RFID tag 51 stores data on used conditions and traveling distances of aircraft tires, for example. The data stored in the RFID tag 51 is read out by use of a reader/writer, and is used for the management of the aircraft tires.

As illustrated in Fig. 3A and Fig. 3B, the functional component 50 is shorter in the tire circumferential direction and lighter than the balance patch 40 when attached.

The functional component 50 is attached to the tire inner surface 30 after the attachment of the balance patch 40.

### 2. Operational Effects

The operations and effects of the tire 10 are described below.

According to the present embodiment, at least one balance patch 40 is arranged on the tire inner surface 30 that is the surface on the inner side of the tire 10. The functional component 50 having the communication function is arranged on the tire inner surface 30 at a position separated at the predetermined angle θ from the balance patch 40 in the tire circumferential direction. The predetermined angle θ is 90 degrees or greater when the single balance patch 40 is provided (refer to Fig. 2). The arrangement of the balance patch 40 and the functional component 50 separated from each other at 90 degrees or greater in the tire circumferential direction avoids unintentional damage to the functional component 50 in the process of removing the balance patch 40 during the manufacture of the retread tire. This prevents the functional component 50 from being broken up accordingly.

The balance patch 40 provided for adjusting the weight balance of the tire 10 inevitably makes the circumference around the arrangement position slightly heavier. According to the present embodiment, the arrangement of the smaller and lighter functional component 50 than the balance patch 40 separated from each other at 90 degrees or greater in the tire circumferential direction can improve the uniformity of the tire 10.

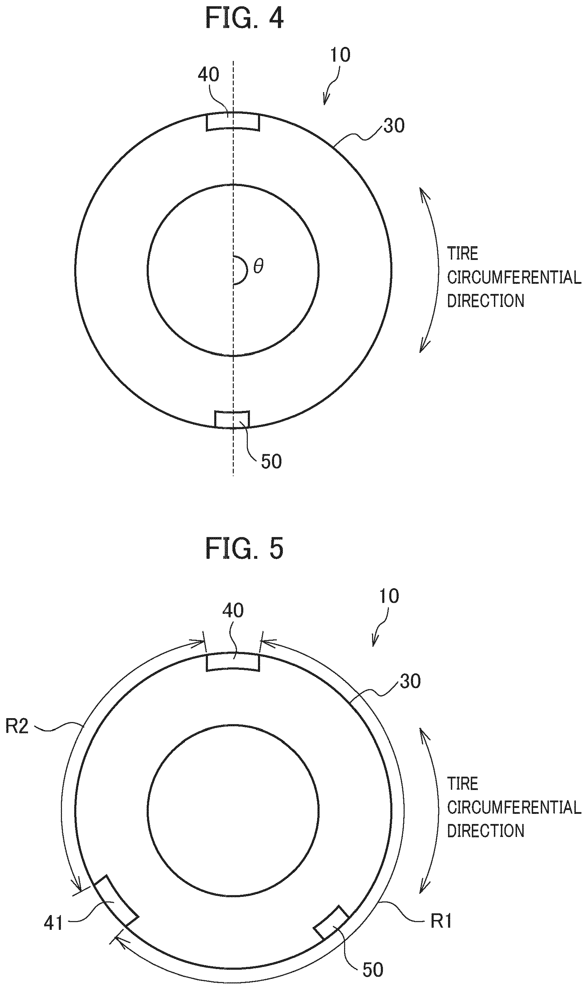

The functional component 50 may be arranged at a position separated from the balance patch 40 at 180 degrees in the tire circumferential direction, as illustrated in Fig. 4. This arrangement leads the functional component 50 to be located at a position furthest from the balance patch 40, so as to prevent damage to the functional component 50 and improve the uniformity of the tire 10.

As illustrated in Fig. 5, two balance patches (balance patches 40 and 41) may be provided. The functional component 50 in this case only needs to be arranged in a region having a wider gap between the balance patch 40 and the balance patch 41 in the tire circumferential direction. Fig. 5 illustrates the case in which the balance patch 40 and the balance patch 41 define two gaps (regions R1 and R2) in the tire circumferential direction. The functional component 50 is thus led to be arranged in the region R1 wider than the region R2. This arrangement can also achieve the same effects as described above.

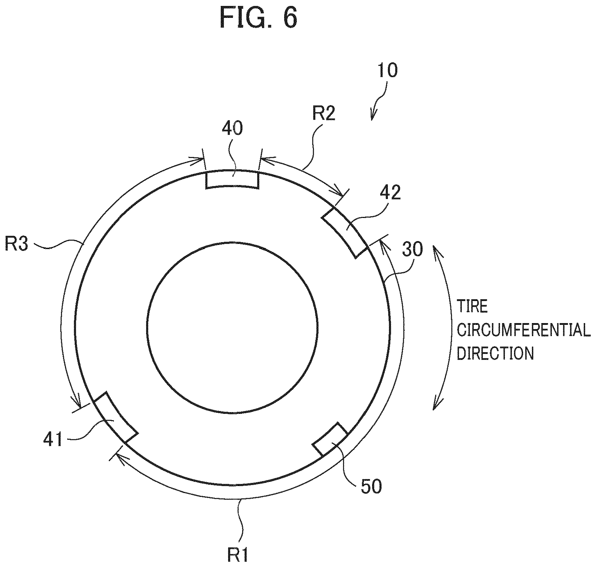

As illustrated in Fig. 6, three balance patches (balance patches 40 to 42) may be provided. The functional component 50 in this case only needs to be arranged in a region having the widest gap between the balance patches in the tire circumferential direction. Fig. 6 illustrates the case in which the respective balance patches define three gaps (regions R1 to R3) in the tire circumferential direction. The functional component 50 is thus led to be arranged in the region R1 wider than the region R2 and the region R3. This arrangement can also achieve the same effects as described above.

When the two or more balance patches are provided, as illustrated in Fig. 5 and Fig. 6, the predetermined angle θ between the functional component 50 and the respective balance patches is not necessarily 90 degrees or greater, and may be set to be less than 90 degrees. The angle between the functional component 50 and the respective balance patches is, however, preferably set to be larger in view of the prevention of damage to the functional component 50.

The tire 10 according to the present embodiment is manufactured by the process described below. At least the single balance patch 40 is attached to the tire inner surface 30, and the functional component 50 is then attached to the tire inner surface 30 at a position separated at the predetermined angle from the balance patch 40 in the circumferential direction, so as to manufacture the tire 10. If this process is reversed, in particular, if the functional component 50 is attached to the tire 10 first, and a test for examining the uniformity is executed so as to determine the position at which the balance patch 40 should be attached, the attachment position of the balance patch 40 could overlap with the position at which the RFID tag is attached. The manufacturing method according to the present embodiment can avoid such a problem, so as to not only lead the balance patch 40 and the functional component 50 to be separated from each other at a predetermined angle, but also improve the uniformity of the tire 10.

While the present invention has been described above by reference to the embodiment, it should be understood that the present invention is not intended to be limited to the descriptions and the drawings composing part of this disclosure. Various alternative embodiments, examples, and technical applications will be apparent to those skilled in the art according to this disclosure. The scope of the invention is defined by the appended claims.

For example, the functional component 50 may be arranged at the lightest point of the tire 10. The term "lightest point" refers to a position at which the tire 10 has the lightest weight.

The embodiment has been illustrated above with the case in which the balance patch 40 and the functional component 50 are each arranged in the middle on the tire equator line on the rear side of the tread 20, but is not limited to this case. The balance patch 40 and the functional component 50 only need to be arranged on the tire inner surface 30, and may be arranged on the rear side of the side part, for example.

In view of the operating efficiency in the steps of attaching and removing the balance patch 40, at least a part of the balance patch 40 is preferably located on the tire equator line. Avoiding arranging the functional component 50 on the equator line in this case can further reduce a risk of unintentionally causing damage to the RFID in the step of removing the balance patch 40.

### REFERENCE SIGNS LIST

- 10: PNEUMATIC TIRE
- 20: TREAD
- 30: TIRE INNER SURFACE
- 40, 41, 42: BALANCE PATCH
- 50: FUNCTIONAL COMPONENT
- 51: RFID TAG
- 60: RIM HOLE
- 51: RFID TAG
- 60: RIM HOLE

## Claims

1. A method of manufacturing a pneumatic tire (10), comprising:
a first step of attaching at least one balance patch (40) to a tire inner surface (30) that is a surface on an inner side of the tire (10); and
a second step of attaching a functional component (50) having a communication function to the tire inner surface (30) at a position separated at a predetermined angle from the at least one balance patch (40) in a tire circumferential direction after the at least one balance patch (40) is attached to the tire inner surface (30);
wherein the functional component (50) is lighter than the balance patch (40).

2. The method of manufacturing the pneumatic tire (10) according to claim 1, wherein a gap between the at least one balance patch (40) and the functional component (50) in the tire circumferential direction is longer than a length of the at least one balance patch (40) in the tire circumferential direction.

3. The method of manufacturing the pneumatic tire (10) according to claim 1 or 2, wherein the predetermined angle is 90 degrees or greater when the at least one balance patch (40) is provided at a single position.

4. The method of manufacturing the pneumatic tire (10) according to claim 1 or 2, wherein:
the at least one balance patch (40) comprises a plurality of balance patches; and
the functional component (50) is arranged in a region having a widest gap between the balance patches in the tire circumferential direction.

5. The method of manufacturing the pneumatic tire (10) according to any preceding claim, wherein the at least one balance patch (40) is located on a tire equator line; and
wherein the functional component (50) is located at a position other than the tire equator line.

## Patentansprüche

1. Verfahren zum Herstellen eines Luftreifens (10), umfassend:
einen ersten Schritt des Anbringens mindestens eines Auswuchtpflasters (40) auf einer inneren Reifenoberfläche (30), d. h. einer Oberfläche auf einer Innenseite des Reifens (10); und
einen zweiten Schritt des Anbringens einer Funktionskomponente (50), die eine Kommunikationsfunktion aufweist, auf der inneren Reifenoberfläche (30) an einer Position, die in einer Reifenumfangsrichtung um einen vorbestimmten Winkel von dem mindestens einen Auswuchtpflaster (40) beabstandet ist, nachdem das mindestens eine Auswuchtpflaster (40) auf der inneren Reifenoberfläche (30) angebracht wurde;
wobei die Funktionskomponente (50) leichter als das Auswuchtpflaster (40) ist.

2. Verfahren zum Herstellen des Luftreifens (10) nach Anspruch 1, wobei eine Lücke zwischen dem mindestens einen Auswuchtpflaster (40) und der Funktionskomponente (50) in Reifenumfangsrichtung länger ist als eine Länge des mindestens einen Auswuchtpflasters (40) in Reifenumfangsrichtung.

3. Verfahren zum Herstellen des Luftreifens (10) nach Anspruch 1 oder 2, wobei der vorbestimmte Winkel 90 Grad oder mehr beträgt, wenn das mindestens eine Auswuchtpflaster (40) an einer einzigen Position bereitgestellt wird.

4. Verfahren zum Herstellen des Luftreifens (10) nach Anspruch 1 oder 2, wobei:
das mindestens eine Auswuchtpflaster (40) eine Vielzahl von Auswuchtpflastern umfasst; und
die Funktionskomponente (50) in einem Bereich angeordnet ist, der in Reifenumfangsrichtung eine größte Lücke zwischen den Auswuchtpflastern aufweist.

5. Verfahren zur Herstellung des Luftreifens (10) nach einem vorstehenden Anspruch, wobei sich das mindestens eine Auswuchtpflaster (40) auf einer Reifenäquatorlinie befindet; und
wobei sich die Funktionskomponente (50) an einer anderen Position als der Reifenäquatorlinie befindet.

## Revendications

1. Procédé de fabrication d'un pneu (10), comprenant :
une première étape de fixation d'au moins une pastille d'équilibrage (40) sur une surface intérieure (30) du pneu qui est une surface sur un côté intérieur du pneu (10) ; et
une seconde étape de fixation d'un composant fonctionnel (50) présentant une fonction de communication à la surface intérieure du pneu (30) en une position séparée à un angle prédéterminé de la au moins une pastille d'équilibrage (40) dans une direction circonférentielle du pneu après que la au moins une pastille d'équilibrage (40) est fixée à la surface intérieure du pneu (30) ;
dans lequel le composant fonctionnel (50) est plus léger que la pastille d'équilibrage (40).

2. Procédé de fabrication du pneu (10) selon la revendication 1, dans lequel un espace entre la au moins une pastille d'équilibrage (40) et le composant fonctionnel (50) dans la direction circonférentielle du pneu est plus important qu'une longueur de la au moins une pastille d'équilibrage (40) dans la direction circonférentielle du pneu.

3. Procédé de fabrication du pneu (10) selon la revendication 1 ou 2, dans lequel l'angle prédéterminé est de 90 degrés ou plus lorsque la au moins une pastille d'équilibrage (40) est disposée en une position unique.

4. Procédé de fabrication du pneu (10) selon la revendication 1 ou 2, dans lequel :
la au moins une pastille d'équilibrage (40) comprend une pluralité de pastilles d'équilibrage ; et
le composant fonctionnel (50) est agencé dans une région présentant le plus grand écart entre les pastilles d'équilibrage dans la direction circonférentielle du pneu.

5. Procédé de fabrication du pneu (10) selon une quelconque revendication précédente, dans lequel la au moins une pastille d'équilibrage (40) est située sur une ligne d'équateur de pneu ; et
dans lequel le composant fonctionnel (50) est situé en une position autre que la ligne d'équateur de pneu.
